(19) Europäisches Patentamt
European Patent Office
Office européen des brevets

(11) **EP 0 933 399 B1**

(12) **EUROPÄISCHE PATENTSCHRIFT**

(45) Veröffentlichungstag und Bekanntmachung des Hinweises auf die Patenterteilung:
**13.09.2000   Patentblatt 2000/37**

(51) Int Cl.$^7$: **C08L 83/08**, C08J 3/03

(21) Anmeldenummer: **98122573.3**

(22) Anmeldetag: **03.12.1998**

(54) **Durch Michael-Addition-ähnliche Reaktionen vernetzte Aminosiliconölemulsionen**

Aminosilicone oil emulsions crosslinked by Michael addition-type reactions

Emulsions d'huile d'aminosilicone réticulé par des réactions d'addition du type Michael

(84) Benannte Vertragsstaaten:
**DE FR GB**

(30) Priorität: **29.01.1998   DE 19803468**

(43) Veröffentlichungstag der Anmeldung:
**04.08.1999   Patentblatt 1999/31**

(73) Patentinhaber: **Wacker-Chemie GmbH**
**81737 München (DE)**

(72) Erfinder:
 • **Dauth, Jochen, Dr.**
   **84489 Burghausen (DE)**
 • **Deubzer, Bernward, Dr.**
   **84489 Burghausen (DE)**
 • **Schröck, Robert, Dr.**
   **84503 Altötting (DE)**
 • **Gratzl, Petra**
   **84577 Tüssling (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 780 422          EP-A- 0 844 268**
**US-A- 4 698 406**

**Beschreibung**

Siliconöl(mikro)emulsionen mit Si-C gebundenen Aminogruppen sind zahlreich in der Literatur bekannt. Vernetzte Siliconstrukturen in Emulsion werden zumeist durch Einbringen von T-oder Q-Strukturen (tri- oder tetrafunktionelle Siloxaneinheiten) erreicht.

Die Polymerisation von Cyclopolyorganosiloxanen in Emulsion zu Polydiorganosiloxanmikroemulsionen ist in EP-B 228 575 (Dow Corning Corporation; veröffentlicht am 03.02.93) beschrieben. Funktionelle Gruppen können über entsprechende Alkoxysilane eingebaut werden, wobei über sogenannte T-Silane (trifunktionelle Silane) auch Verzweigungen beinhaltet sind.

Silicon-Latices werden in EP-A 739 928 (Dow Corning Corporation; offengelegt am 30.10.96) offenbart. Die Vernetzung in Emulsion erfolgt über eine Kondensations-, Additions- oder radikalische Polymerisationsreaktion. Die Addition erfolgt dabei beispielsweise über die Anlagerung von Si-gebundenem Wasserstoff an Si-gebundene Vinylgruppen.

Selbstvernetzende Siliconemulsionen sind aus EP-A 739 947 (Dow Corning Corporation, offengelegt am 30.10.96) bekannt. Die Vernetzung erfolgt über Acetoxy-, Aminoxy-, Acetamid-, Carboxy-, Cycloalkyl- oder Oximgruppen.

In EP-A 739 929 (Dow Corning Corporation, offengelegt am 30.10.96) sind Siliconlatices mit guter Temperaturstabilität beschrieben. Die Eigenschaften werden durch spezielle Emulgatoren erreicht.

Bei Raumtemperatur vernetzbare Siliconelastomere sind in US-A 4,698,406 (Dow Corning Corporation; ausgegebenen am 06.10.87) offenbart. Die Siliconelastomere werden durch eine Michael-Addition-ähnliche Reaktion von Aminosiliconen mit Siliconacrylaten dargestellt.

Ein Verfahren zur Herstellung von Siliconmikrokapseln mittels einer Michael-Addition-ähnlichen Reaktion von Siliconen mit Acryl- und Aminogruppen ist in EP-B 267 003 (Dow Corning Corporation, veröffentlicht am 29.07.92) beschrieben.

Eine Michael-Addition-ähnliche Reaktion von aminfunktionellen Polyorganosiloxanen mit monoacryliertem Polyoxyalkylen ist in EP-A 475 363 (Dow Corning Toray Silicone, offengelegt am 18.03.92) offenbart. Die Polyorganosiloxane zeichnen sich bei der Anwendung als Textilausrüstungsmaterial durch eine geringe Vergilbung und einen guten Weichgriff aus. Die Darstellung erfolgt in Lösung und erlaubt keine Umsetzung mit Diacrylaten, was unweigerlich zur Vergelung führen würde.

Es bestand die Aufgabe, Organopolysiloxanzusammensetungen bereitzustellen, die aus aminfunktionellen Organopolysiloxanen erhalten werden. Weiterhin bestand die Aufgabe, Organopolysiloxanemulsionen bereitzustellen, die erhalten werden, indem Aminsiliconölemulsionen oder Aminsiliconölmikroemulsionen vernetzt und gegebenenfalls zusätzlich funktionalisiert werden, ohne daß die Emulsion bricht.

Gegenstand der Erfindung sind Organopolysiloxanzusammensetzungen enthaltend

(A) Organopolysiloxane, welche mindestens einen SiC-gebundenden organischen Rest mit basischem Stickstoff aufweisen, wobei der basische Stickstoff partiell als Salz einer wasserlöslichen organischen oder anorganischen Säure oder wasserunlöslichen organischen Säure vorliegen kann,
(B) in (A) unlösliche oder lösliche, anionische, kationische, nicht-ionische oder amphotere Tenside,
(C) substituierte oder nicht substituierte Diacrylate und/oder Oligoacrylate,
gegebenenfalls (C') substituierte oder nicht substituierte Acrylate und
(D) Wasser.

Gegenstand der Erfindung sind Organopolysiloxanzusammensetzungen herstellbar, indem Emulsionen enthaltend

(A) Organopolysiloxane, welche mindestens einen SiC-gebundenden organischen Rest mit basischem Stickstoff aufweisen, wobei der basische Stickstoff partiell als Salz einer wasserlöslichen organischen oder anorganischen Säure oder wasserunlöslichen organischen Säure vorliegen kann,
(B) in (A) unlösliche oder lösliche, anionische, kationische, nicht-ionische oder amphotere Tenside und
(D) Wasser mit
(C) substituierten oder nicht substituierten Diacrylaten und/oder Oligoacrylaten
und gegebenenfalls (C') substituierten oder nicht substituierten Acrylaten

in einer Michael-Addition-ähnlichen Reaktion umgesetzt werden.

Gegenstand der Erfindung ist ein Verfahren zur Herstellung von Organopolysiloxanzusammensetzungen, dadurch gekennzeichnet, daß
Emulsionen enthaltend

(A) Organopolysiloxane, welche mindestens einen SiC-gebundenden organischen Rest mit basischem Stickstoff aufweisen, wobei der basische Stickstoff partiell als Salz einer wasserlöslichen organischen oder anorganischen Säure oder wasserunlöslichen organischen Säure vorliegen kann,

(B) in (A) unlösliche oder lösliche, anionische, kationische, nicht-ionische oder amphotere Tenside und

(D) Wasser mit

(C) substituierten oder nicht substituierten Diacrylaten und/oder Oligoacrylaten

und gegebenenfalls (C') substituierten oder nicht substituierten Acrylaten

in einer Michael-Addition-ähnlichen Reaktion umgesetzt werden. Die Organopolysiloxane, welche mindestens einen SiC-gebundenen organischen Rest mit basischem Stickstoff aufweisen, sind vorzugsweise solche aus Einheiten der allgemeinen Formel

$$R_a Y_b Si(OR^1)_c O_{\frac{4-(a+b+c)}{2}} \qquad (I),$$

worin R gleich oder verschieden sein kann und Wasserstoffatom oder einen einwertigen, von basischem Stickstoff freien organischen Rest bedeutet,

R$^1$ gleich oder verschieden sein kann und Wasserstoffatom, einen Alkylrest oder einen Alkoxyalkylrest bedeutet,

Y gleich oder verschieden sein kann und einen einwertigen, SiC-gebundenen Rest mit basischem Stickstoff bedeutet,

a 0, 1, 2 oder 3,

b 0, 1, oder 2 und

c 0, 2 oder 3 ist,

mit der Maßgabe, daß die Summe aus a, b und c in den Einheiten der Formel (I) kleiner oder gleich 3 ist und pro Molekül mindestens ein Rest Y enthaltend ist.

Beim Rest R handelt es sich vorzugsweise um einwertige Kohlenwasserstoffreste mit 1 bis 18 Kohlenstoffatom (en).

Beispiel für Reste R sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylrest, wie der 2,2,4-Trimethylpentylrest, Nonylreste, wie der n-Nonylrest, Decylreste, wie der n-Decylrest, Dodecylreste, wie der n-Dodecylrest, Octadecylreste, wie der n-Octadecylrest; Alkenylreste, wie der Vinyl- und der Allylrest, Cycloalkylreste, wie Cyclopentyl-, Cyclohexyl-, Cycloheptylreste und Methylcyclohexylreste, Arylreste, wie der Phenyl-, Naphthyl-, Anthryl- und Phenanthrylrest; Alkarylreste, wie o-, m-, p-Tolylreste, Xylylreste und Ethylphenylreste; Aralkylreste, wie der Benzylrest, der α- und der β-Phenylethylrest, wobei der Methylrest, Ethylrest, n-Propylrest, Iso-Propylrest und n-Butylrest bevorzugt sind und der Methylrest besonders bevorzugt ist.

Beim Rest R$^1$ handelt es sich vorzugsweise um Alkylreste mit 1 bis 4 Kohlenstoffatom(en). Beispiele für Alkylreste R$^1$ sind der Methyl-, Ethyl-, n-Propyl-, iso-Propyl-, n-Butyl-, iso-Butyl- und tert.-Butylrest, wobei der Methyl- und Ethylrest bevorzugt sind.

Beispiele für Alkoxyalkylreste sind der Methoxyethyl- und der Ethoxyethylrest.

Vorzugsweise sind die Reste Y solche der Formel

$$R^2{}_2 NR^3(-NR^2-R^3)_x- \qquad (II)$$

worin x 0 oder eine ganze Zahl von 1 bis 10 bedeutet,

R$^2$ gleich oder verschieden sein kann und Wasserstoff, einen Alkylrest, Cycloalkylrest oder ein Rest der Formeln -C(=O)-R oder -CH$_2$-CH$_2$-C(=O)-O-R (wobei R die oben dafür angegebene Bedeutung hat) bedeutet und R$^3$ einen zwei-wertigen Kohlenwasserstoffrest mit 1 bis 12 Kohlenstoffatomen je Rest bedeutet.

Die Beispiele für Alkyl- und Cycloalkylrest R gelten in vollem Umfang auch für Alkyl- bzw. Cycloalkylreste R$^2$.

Vorzugsweise ist an jedes Stickstoffatom in den Resten der Formel (II) mindestens ein Wasserstoffatom ge-bunden.

Beispiele für Reste R$^3$ sind der Methylen-, Ethylen-, Propylen-, Butylen-, Cyclohexylen-, Octadecylen-, Phenylen- und Butenylenrest, wobei, insbesondere wegen der leichten Zugänglichkeit, der n-Propylenrest bevorzugt ist.

Beispiele für Reste Y sind:

$H_2N(CH_2)_3^-$
$H_2N(CH_2)_2NH(CH_2)_3^-$
$H_2N(CH_2)_2^-$
$H_3CNH(CH_2)_3^-$
$H_2N(CH_2)_4^-$
$H_2N(CH_2)_5^-$
$H(NHCH_2CH_2)_3^-$
$C_4H_9NH(CH_2)_2NH(CH_2)_2^-$ und
cyclo-$C_6H_{11}NH(CH_2)_3^-$,
wobei $H_2N(CH_2)_2NH(CH_2)_3^-$ besonders bevorzugt ist.

Der durchschnittliche Wert von a liegt vorzugsweise zwischen 1,66 und 1,99, besonders bevorzugt zwischen 1,40 und 1,96. Der durchschnittliche Wert von b liegt vorzugsweise zwischen 0,01 und 0,25, besonders bevorzugt zwischen 0,02 und 0,17. Der durchschnittliche Wert von c liegt vorzugsweise zwischen 0 und 0,63, besonders bevorzugt zwischen 0 und 0,45.

Die Organopolysiloxane aus Einheiten der allgemeinen Formel (I) haben bei 25°C vorzugsweise eine Viskosität von 5 bis 10 000 $mm^2$/s, besonders bevorzugt 10 bis 5 000 $mm^2$/s.

Die Organopolysiloxane aus Einheiten der allgemeinen Formel (I) weisen basischen Stickstoff in Mengen von vorzugsweise 0,1 bis 8 Gew.-%, bevorzugt von 0,2 bis 2,8 Gew.-%, besonders bevorzugt von 0,4 bis 2,1 Gew.-%, jeweils bezogen auf das Gesamtgewicht des Organopolysiloxans, auf. Der Begriff "basischer Stickstoff" bezieht sich dabei auf Stickstoff, berechnet als Element.

Bevorzugt als Organopolysiloxane, welche mindestens einen SiC-gebundenen organischen Rest mit basischem Stickstoff aufweisen, sind solche der allgemeinen Formel

$$Y_gR_{3-g}SiO(SiR_2O)_m(SiRYO)_nSiR_{3-g}Y_g \qquad\qquad (III),$$

wobei R und Y die oben dafür angegebene Bedeutung haben, g 0, 1 oder 2 ist,

m 0 oder eine ganze Zahl von 1 bis 500 ist,
n 0 oder eine ganze Zahl von 1 bis 100 ist,

mit der Maßgabe, daß mindestens ein Rest Y je Molekül enthalten ist und die m-Einheiten $(SiR_2O)$ und die n-Einheiten (SiRYO) beliebig im Molekül verteilt sein können.

Bei den Organopolysiloxanen aus Einheiten der Formel (I) handelt es sich besonders bevorzugt um im wesentlichen lineare Organopolysiloxane mit einem Verhältnis von Diorganosiloxaneinheiten $(SiR_2O)$ mit von basischem Stickstoff freien, SiC-gebundenen Resten zu Diorganosiloxyeinheiten (SiRYO) mit SiC-gebundenen Resten mit basischem Stickstoff von vorzugsweise 300 : 1 bis 5 : 1, besonders bevorzugt 100 : 1 bis 10 : 1, insbesondere von 90 : 1 bis 15 : 1.

Beispiele für Organopolysiloxane aus Einheiten der Formel (I) sind:

$$H_2N(CH_2)_3SiMe_2O(SiMe_2O)_{15}SiMe_2(CH_2)_3NH_2$$

$$(CH_3)_3SiO(SiMe[(CH_2)_3NH_2]O)(SiMe_2O)_{25}Si(CH_3)_3$$

$$(CH_3)_3SiO(SiMe[(CH_2)_3NH_2]O)(SiMe_2O)_{90}Si(CH_3)_3$$

$$(CH_3)_3SiO(SiMe[(CH_2)_3NHCH_2CH_2NH_2]O)(SiMe_2O)_{90}Si(CH_3)_3$$

$$(CH_3)_3SiO(SiMe[(CH_2)_3NHCH_2CH_2NH_2]O)(SiMe_2O)_{45}Si(CH_3)_3$$

$$(CH_3)_3SiO(SiMe[(CH_2)_3NHCH_2CH_2NH_2]O)(SiMe_2O)_{90}Si(CH_3)_3$$

$$MeO(CH_3)_3SiO(SiMe[(CH_2)_3NHCH_2CH_2NH_2]O)(SiMe_2O)_{70}Si(CH_3)_2OMe$$

$$H_2N-CH_2CH_2-NH-(CH_2)_3SiMe_2O(SiMe_2O)_{50}SiMe_2(CH_2)_3NH-CH_2CH_2-NH_2.$$

Verfahren zur Herstellung von Organopolysiloxanen aus Einheiten der Formel (I) sind allgemein bekannt. Hierzu sei beispielsweise auf W. Noll, "Chemistry and Technology of Silicones", Academic Press Inc., 1968, Seiten 208/209 und die US-A 4,661,551 verwiesen.

Die wasserlöslichen organischen oder anorganischen Säuren, die zur Herstellung von Bestandteil A der erfindungsgemäßen Organopolysiloxanzusammensetzungen verwendet werden können, können die gleichen sein, die auch bisher zur Herstellung von Salzen von wasserlöslicher organischer oder anorganischer Säure und Organopolysiloxan mit basischem Stickstoff aufweisenden, SiC-gebundenen Resten eingesetzt werden konnten.

Beispiele für derartige wasserlösliche Säuren sind Ameisensäure, Essigsäure, Propionsäure, Buttersäure, Diethylhydrogenphosphat, HCl, $H_2SO_4$ und $H_3PO_4$, wobei Essigsäure und $H_2SO_4$ bevorzugt sind und Essigsäure besonders bevorzugt ist.

Die wasserunlöslichen organischen Säuren, die zur Herstellung des Bestandteils A der erfindungsgemäßen Organopolysiloxanzusammensetzungen verwendet werden können, können ebenfalls die gleichen sein, die auch bisher zur Herstellung von Salzen von wasserunlöslichen organischen Säuren und Organopolysiloxanen mit basischem Stickstoff aufweisenden, SiC-gebundenen Resten eingesetzt werden konnten. Beispiele für derartige wasserunlösliche Säuren sind Ölsäure, Palmitinsäure und Stearinsäure, wobei Ölsäure besonders bevorzugt ist.

Bei dem Bestandteil (B) der erfindungsgemäßen Organopolysiloxanzusammensetzungen handelt es sich um kommerziell erwerbbare und gut untersuchte Tenside, wie z.B. Sorbitanester von Fettsäuren mit 10 bis 22 Kohlenstoffatomen; Polyoxyethylensorbitanestern von Fettsäuren mit 10 bis 22 Kohlenstoffatomen und bis zu 35 Prozent Ethylenoxidgehalt; Polyoxyethylensorbitolestern von Fettsäuren mit 10 bis 22 Kohlenstoffatomen; Polyoxyethylenderivate von Phenolen mit 6 bis 20 Kohlenstoffatomen am Aromaten und bis zu 95 Prozent Ethylenoxidgehalt; Fettamino- und Amidobetaine mit 10 bis 22 Kohlenstoffatomen; Polyoxyethylenkondensate von Fettsäuren oder Fettalkoholen mit 10 bis 22 Kohlenstoffatomen mit bis zu 95 Prozent Ethylenoxidgehalt; ionische Tenside, wie Alkylarylsulfonate mit 6 bis 20 Kohlenstoffatomen in der Alkylgruppe; Fettsäureseifen mit 10 bis 22 Kohlenstoffatomen; Fettsulfate mit 10 bis 22 Kohlenstoffatome; Alkylsulfonate mit 10 bis 22 Kohlenstoffatomen; Alkalimetallsalze von Dialkylsulfosuccinaten; Fettaminoxide mit 10 bis 22 Kohlenstoffatomen; Fettimidazoline mit 6 bis 20 Kohlenstoffatomen; Fettamidosulfobetaine mit 10 bis 22 Kohlenstoffatomen; quarternäre Tenside, wie Fettammoniumverbindungen mit 10 bis 22 Kohlenstoffatomen; Fettmorpholinoxide mit 10 bis 22 Kohlenstoffatomen; Alkalimetallsalze von carboxylierten, ethoxylierten Alkoholen mit 10 bis 22 Kohlenstoffatomen und bis zu 95 Prozent Ethylenoxid; Ethylenoxidkondensate von Fettsäuremonoestern des Glycerins mit 10 bis 22 Kohlenstoffatomen und bis zu 95 Prozent Ethylenoxid; Mono- oder Diethanolamide von Fettsäuren mit 10 bis 22 Kohlenstoffatomen; alkoxylierte Silicontenside mit Ethylenoxid- und oder Propylenoxideinheiten; Phosphatester.

Wie auf dem Gebiet der Tenside wohl bekannt, können die Gegenionen im Falle von anionischen Tensiden Alkalimetalle, Ammoniak oder substituierte Amine, wie Trimethylamin oder Triethanolamin, sein. Normalerweise sind Ammonium-, Natrium- und Kaliumionen bevorzugt. Im Falle von kationische Tensiden ist das Gegenion ein Halogenid, Sulfat oder Methylsulfat. Chloride sind die zumeist industriell verfügbaren Verbindungen.

Die obengenannten Fettstrukturen stellen üblicherweise die lipophile Hälfte der Tenside dar. Eine übliche Fettgruppe ist eine Alkylgruppe natürlichen oder synthetischen Ursprungs. Bekannte ungesättigte Gruppen sind die Oleyl-, Linoleyl-, Decenyl-, Hexadecenyl- und Dodecenylreste. Alkylgruppen können dabei cyclisch, linear oder verzweigt sein.

Andere mögliche Tenside sind Sorbitolmonolaurat-Ethylenoxidkondensate; Sorbitolmonomyristat-Ethylenoxidkondensate; Sorbitolmonostearat-Ethylenoxidkondensate; Dodecylphenol-Ethylenoxidkondensate; Myristylphenol-Ethylenoxidkondensate; Octylphenyl-Ethylenoxidkondensate; Stearylphenol-Ethylenoxidkondensate; Laurylalkohol-Ethylenoxidkondensate; Stearylalkohol-Ethylenoxidkondensate; Decylaminobetain; Cocoamidsulfobetain; Olylamidobetain; Cocoimidazolin; Cocosulfoimidazolin; Cetylimidazolin; 1-Hydroxyethyl-2-heptadecenylimidazolin; n-Cocomorpholinoxid; Decyldimethylaminoxid; Cocoamidodimethylaminoxid; Sorbitantristearat mit kondensierten Ethylenoxidgruppen; Sorbitantrioleat mit kondensierten Ethylenoxidgruppen; Natrium- oder Kaliumdodecylsulfat; Natrium- oder Kaliumstearylsulfat; Natrium- oder Kaliumdodecylbenzolsulfonat; Natrium- oder Kaliumstearylsulfonat; Triethanolaminsalz des Dodecylsulfates; Trimethyldodecylammoniumchlorid; Trimethylstearylammoniummethosulfat; Natriumlaurat; Natrium- oder Kaliummyristat.

Der Bestandteil (B) kann aus einem o.g. Tensid oder aus einem Gemisch zweier oder mehrerer o.g. Tenside bestehen.

Bei dem Bestandteil (C) der erfindungsgemäßen Organopolysiloxanzusammensetzungen handelt es sich um zumeist kommerziell erwerbbare substituierte oder nicht substituierte Di(meth)acrylate und/oder Oligo(meth)acrylate, die wasserlöslich oder wasserunlöslich sein können.

Bei dem gegebenenfalls mitverwendeten Bestandteil (C') der erfindungsgemäßen Organopolysiloxanzusammensetzungen handelt es sich um zumeist kommerziell erwerbbare substituierte oder nicht substituierte (Meth)acrylate, die wasserlöslich oder wasserunlöslich sein können.

Beispiele für nicht substituierte Di(meth)acrylate sind: Hexandioldiacrylat, Butandioldiacrylat, GX-8370 (Fa. Siber-Hegner), 1,3-Butandioldimethacrylat, Neopentylglycoldiacrylat.

Beispiele für substituierte Di(meth)acrylate sind:

2-Hydroxy-1-acryloxy-3-methacrylat, 2,2-Dimethylpropionsäure-2,2-dimethylpropanesterdiacrylat, Pentaaerythritoldiacrylatmonostearat, Polyethylenglykol-400-diacrylat, Polyethylenglykol-300-diacrylat, Polypropylenglykol-400-diacrylat, Tetraethylglykoldiacrylat, Polypropylenglykol-700-diacrylat, 2,2-bis-[4-Acryloxydiethoxy)-phenylpropan, Triethylenglykoldiacrylat, Tripropylenglykoldiacrylat, SR 349 (Fa. Sartomer), Polyethylenglykol-600-diacrylat, propoxyliertes Neopentylglykoldiacrylat.

Beispiel für ein nicht substituiertes Oligo(meth)acrylat ist Trimethylolpropantriacrylat.

Beispiele für substituierte Oligo(meth)acrylate sind:

M-325 (Fa. Siber-Hegner), Pentaerythritolpentaacrylat und -hexaacrylat, A-TMMT (Fa. Siber-Hegner), Tetramethylolmethantriacrylate, Trimethylolmethanoltriacrylat, Trimethylolpropanethoxylattriacrylat, Tris (acryloyloxyethyl)phosphat, Tris(2-Hydroxyethyl)-isocyanurat-triacrylat, ethoxyliertes Trimethylolpropantriacrylat, propoxyliertes Trimethylolpropantriacrylat, propoxyliertes Glyceryltriacrylat, Di-Trimethylol-propantetraacrylat, Dipentaaerythritolpentaacrylat, ethoxyliertes Pentaaerythritoltetraacrylat.

Beispiele für nicht substituierte Mono(meth)acrylate sind Methylacrylat, Ethylacrylat, Butylacrylat, Methylmethacrylat, Cyclohexylacrylat, Isobornylacrylat, Laurylacrylat, Stearylacrylat, Ethylhexylacrylat, Tridecylacrylat, Isooctylacrylat.

Beispiele für substituierte Mono(meth)acrylate sind:

| | |
|---|---|
| Perfluoralkylethylacrylat | (Fluowet AG 812, Hoechst AG) |
| 2-Acrylamido-2-methyl-1-propansulfonsäure | (Lubrizol) |
| 2-Acryloyloxyethylhydrogenphthalat | (Viscoat 2000, Siber-Hegner GmbH) |
| beta-Acryloyloxyethylhydrogensuccinat | (ASA, Siber-Hegner GmbH) |
| Acryloyloxyethylphosphorsäure | (Lightester PA, Toagosei) |
| 2-Acryloyloxypropylhydrogenphthalat | (Viscoat 21oo, Siber-Hegner GmbH) |

Acrylsäure-(3-sulfonpropyl)-esterkaliumsalz, Itaconsäure-bis-(3-sulfopropyl-esterdikaliumsalz, N,N-Dimethyl-N-methacryloxaethyl-N-(3-sulfopropyl)-ammoniumbetain, 2-Carboxy-ethylacrylat, 2-Hydroxyethylacrylat, 2-Ethylthioethylmethacrylat, Acrylamid, 2-Acrylamido-2-methoxyessigsäuremethylester, Acrylnitril, (2-(Acryloxy)-ethyl)-(4-benzolbenzyl)-dimethyl-ammoniumbromid, Acrylsäure-(2-hydroxyethylester), Acryloxydimethylbutyrolacton, Acrylsäure, Methoxypolyethylenglykol-400-acrylat, Nonylphenolethoxylatacrylat (N-117E, Siber-Hegner), Nonylphenoldiethoxylatacrylat, Phenoxydiethylenglykolacrylat, Phenoxyethylacrylat, Dimethylamnoethylacrylat, Dimethyaminoethylacrylatmethylchloridsalz, Glycidylacrylat, Phenoxypolyethylenglykolacrylat, 2,2,3,3-Tetrafluorpropylacrylat, Methoxypolyethylenglykol-1000-methacrylat, Tetrahydrofurfurylacrylat, Caprolactonacrylat, 2(2-Ethoxyethoxy) ethylacrylat, 2-Acrylamidoglykolsäure.

Der Bestandteil (C) kann aus einem Gemisch zweier oder mehrerer Di- und/oder Oligoacrylate bestehen. Der Bestandteil (C) wird in einer für die Vernetzung der Organopolysiloxane (A) in Emulsion im Zuge einer Michael-Addition-ähnlichen Reaktion ausreichenden Menge eingesetzt.

Bei dem erfindungsgemäßen Verfahren werden pro Mol des SiC-gebundenen organischen Restes mit basischem Stickstoff in (A), vorzugsweise pro Mol des Restes Y in (A), bevorzugt pro Mol des Restes der Formel (II) vorzugsweise 0,001 - 10 Mol, bevorzugt 0,01 - 5 Mol und besonders bevorzugt 0,1 - 3 Mol Acrylatdoppelbindung in (C) eingesetzt.

Bei dem erfindungsgemäßen Verfahren können aus der Literatur bekannte Verbindungen, die Michael-Addition-ähnliche Reaktionen katalysieren, eingesetzt werden. Beispiele sind Eisessig, Zinn(IV)chlorid, Natriummethylat, Alkaliamide, Ammoniumsalze, Phosphoniumsalze, Sulfoniumsalze, Tetramethylguanidin, 1,5-Diazabicyclo[4.3.0]non-5-en und 1,8-Diazabicyclo[5.4.0]undec-7-en.

Falls beim erfindungsgemäßen Verfahren Katalysator eingesetzt wird, handelt es sich um Mengen von vorzugsweise 0,001 bis 1 Gew.-%, bevorzugt 0,01 bis 0,1 Gew.-%, jeweils bezogen auf das Gesamtgewicht von Bestandteil (A) und (C).

Bei dem erfindungsgemäßen Verfahren können überschüssige Acrylatdoppelbindungen durch eine radikalische Polymerisation oder über eine Hydrosilylierungsreaktion weiter umgesetzt werden.

Die erfindungsgemäße Organopolysiloxanzusammensetzungen enthalten Bestandteil (B) in Mengen von vorzugsweise 0,1 bis 200 Gew.-%, besonders bevorzugt 15 bis 150 Gew.-%, jeweils bezogen auf das Gesamtgewicht an Bestandteil (A).

Die erfindungsgemäßen Organopolysiloxanzusammensetzungen enthalten Bestandteil (C) in Mengen von vorzugsweise 0,1 bis 250 Gew.-%, besonders bevorzugt 1 bis 150 Gew.-%, jeweils bezogen auf das Gesamtgewicht an Bestandteil (A).

Die erfindungsgemäßen Organopolysiloxanzusammensetzungen enthalten Bestandteil (D) in Mengen von vorzugsweise 95 bis 20 Gew.-%, besonders bevorzugt 80 bis 40 Gew.-%, jeweils bezogen auf das Gesamtgewicht an Bestandteil (A).

Die erfindungsgemäßen Organopolysiloxanzusammensetzungen werden bevorzugt durch Emulgierung der Bestandteile (A) und (B) in (D) zu einer Öl-in-Wasser-(Mikro)-Emulsion und anschließender Umsetzung mit (C) und gegebenenfalls (C') hergestellt. Sie können aber auch durch Vermischung und Emulgierung der Bestandteile (A), (B), (C), gegebenenfalls (C') und (D) hergestellt werden.

Das Vermischen oder Emulgieren wird dabei bei einer Temperatur von vorzugsweise 10°C bis 100°C, besonders bevorzugt 25°C bis 90°C, und einem Druck von vorzugsweise 900 bis 2.000 hPa durchgeführt. Es kann aber auch bei höheren oder niedrigeren Drücken gearbeitet werden.

Die erfindungsgemäßen Organopolysiloxanzusammensetzungen sind klare Mikroemulsionen bis milchig weiße Emulsionen. Alle Organopolysiloxan (mikro)emulsionen sind stabil. Entfernt man Komponente (D), erhält man klare bis leicht opake, unlösliche Siliconmassen.

Die erfindungsgemäßen Organopolysiloxanzusammensetzungen dienen der Behandlung von textilen Flächengebilden, wie z .B. Geweben, Maschenwaren oder Vliesen. Die Erfindung betrifft ferner Textilfaserpräparation und Lederbehandlung. Weiterhin finden die erfindungsgemäßen Zusammensetzungen Einsatz in der Kosmetik-, Pflegemittel-, Klebstoff-, Polituren-, Lack-, Papier- und Bauindustrie.

Ferner dienen sie als Antischaummittel und der Verträglichkeitsvermittlung von Organosiliciumverbindungen und organischen Kautschuken.

Die erfindungsgemäßen Zusammensetzungen können dabei zum Beispiel durch Sprühen, Streichen oder Tauchen auf das zu behandelnde Substrat aufgebracht werden.

Darüber hinaus können die erfindungsgemäßen Organopolysiloxanzusammensetzungen für alle Anwendungen eingesetzt werden, bei denen auch bisher Organosiliciumverbindungen in wasseremulgierter Form verwendet wurden.

Die erfindungsgemäßen Organopolysiloxanzusammensetzungen haben den Vorteil, daß Aminsiliconöl(mikro)emulsionen mit Diacrylaten oder Oligoacrylaten und gegebenenfalls Acrylaten im Zuge einer Michael-Addition-ähnlichen Reaktion umgesetzt werden, ohne daß die Emulsion bricht oder aufrahmt und daß das Organopolysiloxan dabei vernetzt wird. In einem einfachen Verfahren können käuflich erwerbliche (Mikro)emulsionen mit gut zugänglichen Acrylatausgangsstoffen gezielt vernetzt und zusätzlich funktionalisiert werden.

Die erfindungsgemäßen Organopolysiloxanzusammensetzungen zeichnen sich durch ihre einfache Darstellungsweise und die Möglichkeit der gezielten Vernetzung aus. Sie enthalten kein Übergangsmetall als Vernetzungskatalysator.

Die erfindungsgemäßen Organopolysiloxanzusammensetzungen können durch Zugabe von funktionalisierten Diacrylaten oder Oligaacrylaten und gegebenenfalls Acrylaten gezielt ionisch und/oder hydrophil eingestellt werden.

Die erfindungsgemäßen Organopolysiloxanzusammensetzungen zeigen auf den behandelten Substraten eine gute Permanenz, eine geringe Vergilbungsneigung und einen guten Weichgriff.

Die erfindungsgemäßen Siliconlatices können, je nach Vernetzungsdichte, spröde bis elastisch eingestellt werden.

Die erfindungsgemäßen Organopolysiloxanzusammensetzungen zeigen mit alkoxylierten Diacrylaten oder Oligoacrylaten und gegebenenfalls alkoxylierten Acrylaten eine gute Scher- und Temperaturstabilität.

Die erfindungsgemäßen Organopolysiloxanzusammensetzungen mit ionischen Gruppen zeichen sich durch eine gute pH-Wert- und Salzstabilität aus.

Beispiel 1:

160,3 g (8 mmol freie Amingruppen) einer Emulsion eines Siliconöles mit Aminoethylaminopropylgruppen und einem Feststoffgehalt von 23,5 Prozent (Finish CT 95 E, käuflich erwerblich bei der Wacker-Chemie GmbH), werden mit 0,904 g (4 mmol) 1,6 -Hexandioldiacrylat versetzt und zwölf Stunden bei Raumtemperatur mit 500 UpM gerührt.

Nach der Filtration über ein feinmaschiges Metallnetz wird eine stabile opake Emulsion mit einem Festgehalt von 22,5 Prozent erhalten. Wird die Emulsion bis zur Gewichtskonstanz getrocknet, wird ein elastischer, unlöslicher Film erhalten.

Beispiel 2:

Beispiel 1 wird, wie oben beschrieben, wiederholt, mit der Abänderung, daß statt 12 Stunden Reaktionszeit bei Raumtemperatur die Emulsion 4 Stunden bei 60°C gerührt wird. Es wird wieder eine stabile, opake, vernetzte Emulsion mit einem Festgehalt von 22,3 Prozent erhalten.

Beispiel 3:

Beispiel 1 wird, wie oben beschrieben, wiederholt, mit der Abänderung, daß statt 0,904 g 1,6-Hexandioldiacrylat 0,796 g (2,76 mmol) Pentaaerythrittriacrylat verwendet werden. Es wird eine stabile, milchig weiße Emulsion mit einem Festgehalt von 23,9 Prozent erhalten.

Beispiel 4:

Beispiel 1 wird, wie oben beschrieben, wiederholt, mit der Abänderung, daß statt 0,904 g 1,6-Hexandioldiacrylat 0,933 (2 mmol) Di(trimethylolpropan)-tetraacrylat verwendet werden. Es wird eine opake, stabile Emulsion mit einem Festgehalt von 24 Prozent erhalten. Wird die Emulsion bis zur Gewichtskonstanz getrocknet, wird ein vernetzter Siliconkautschuk erhalten.

Beispiel 5:

Beispiel 1 wird, wie oben beschrieben, wiederholt, mit der Abänderung, daß statt 0,904 g 0,452 g (2 mmol) 1,6-Hexandioldiacrylat verwendet werden. Es wird eine opake, vernetzte Emulsion mit 4 mmol freien Amingruppen und einem Festgehalt von 24,1 Prozent erhalten.

Beispiel 6:

Beispiel 1 wird, wie oben beschrieben, wiederholt, mit der Abänderung, daß statt 0,904 g 1,6-Hexandioldiacrylat 1,59 g (5,33 mmol) Pentaaerythrittriacrylat verwendet werden. Es wird eine milchige Emulsion mit 8 mmol verfügbaren Acrylatgruppen, die zu einer nachträglichen radikalischen Vernetzung genutzt werden können, erhalten. Der Festgehalt beträgt 23,3 Prozent.

Beispiel 7:

149,6 g (6 mmol freie Amingruppen) einer Emulsion eines Siliconöles mit Aminoethylaminopropylgruppen und einem Feststoffgehalt von 51,1 Prozent (Finish CT 33 E, käuflich erwerblich bei der Wacker-Chemie GmbH), werden mit 0,68 g (3 mmol) 1,6-Hexandioldiacrylat versetzt und zwölf Stunden bei Raumtemperatur mit 800 UpM gerührt.

Nach der Filtration über ein feinmaschiges Metallnetz wird eine stabile klare Mikroemulsion mit einem Festgehalt von 44,9 Prozent erhalten. Wird die Emulsion bis zur Gewichtskonstanz getrocknet, wird ein transparenter, elastischer und in organischen Lösungsmitteln unlöslicher Film erhalten.

Beispiel 8:

153,9 g (4 mmol freie Amingruppen) einer Emulsion eines Siliconöles mit Aminoethylaminopropylgruppen und einem Feststoffgehalt von 39,2 Prozent (Finish CT 45 E, käuflich erwerblich bei der Wacker-Chemie GmbH), werden mit 0,425 g (2 mmol) Neopentylglykoldiacrylat versetzt und zwölf Stunden bei Raumtemperatur gerührt.

Nach der Filtration über ein feinmaschiges Metallnetz wird eine stabile, milchige Emulsion mit einem Festgehalt von 39,3 Prozent erhalten.

Beispiel 9:

1975 g (109,7 mol) Wasser werden mit 24 g Dodigen 226 und 0,8 g (20 mmol) Natriumhydroxid bei 90°C vorgelegt. Es wird ein Gemisch aus 373 g (1,26 mol) Octamethyltetrasiloxan, 23,6 g (0,106 mol) Aminoethylaminopropytrimethoxysilan, 27,7 g (0,2 mol) Methyltrimethoxysilan und 80 g (2,5 mol) Methanol über 4 Stunden bei 90°C dazu getropft. Nach einer Reaktionszeit von 2 Stunden werden 600 ml Destillat bei 90°C entfernt. In die opaleszierende Suspension werden 5,66 g (8mmol) eines Diacrylates der Formel $CH_2$=CH-C(=O)-(O-$CH_2$-$CH_2$)$_{15}$-O-C(=O)-CH=$CH_2$, käuflich erwerblich unter dem Handelsnamen SR 610 bei der Fa. Sartomer, getropft und bei Raumtemperatur weitere 12 Stunden gerührt. Nach der Filtration wird eine stabile, milchig gelbe Suspension mit einem Festgehalt von 21,5 Prozent erhalten.

Beispiel 10:

156,9 g (4 mmol freie Amingruppen) einer Emulsion eines Siliconöles mit Aminoethylaminopropylgruppen und einem Feststoffgehalt von 25,3 Prozent (Finish CT 96 E, käuflich erwerblich bei der Wacker-Chemie GmbH), werden mit 0,398 g (1,34 mmol) Pentaaerythrittriacrylat versetzt und zwölf Stunden bei Raumtemperatur gerührt. Nach der Filtration wird eine stabile, transluzente Emulsion mit einem Festgehalt von 24,2 Prozent erhalten.

Beispiel 11:

Beispiel 1 wird, wie oben beschrieben, wiederholt, mit der Abänderung, daß statt 0,904 g 1,6-Hexandioldiacrylat 2,63 g (6 mmol) eines Acrylates der Formel $CH_2$=CH-C(=O)-(O-$CH_2$-$CH_2$)$_9$-O$CH_3$, käuflich erwerblich unter dem Handelsnamen AM-90G bei der Fa. Siber & Hegner, verwendet werden. Es wird eine transluzente, vernetzte Emulsion mit 2 mmol freien Restamingruppen und einem Festgehalt von 23,9 Prozent erhalten. Die Emulsion wird dann mit 0,23 g (1mmol) 1,6-Hexandioldiacrylat nachvernetzt.

Beispiel 12:

Beispiel 1 wird, wie oben beschrieben, wiederholt, mit der Abänderung, daß statt 0,904 g 1,6-Hexandioldiacrylat 0,09 g (0,4 mmol) 1,6-Hexandioldiacrylat und 1,49 g (7,2 mmol) 2-Acrylamido-2-methyl-1-propionsulfonsäure der Fa. Lubrizol verwendet werden.
Nach der Filtration wird eine stabile, vernetzte und opake Emulsion mit einem Festgehalt von 23,1 Prozent erhalten.

Beispiel 13:

Beispiel 1 wird, wie oben beschrieben, wiederholt, mit der Abänderung, daß statt 0,904 g 1,6-Hexandioldiacrylat 0,27 g (1,2 mmol) 1,6-Hexandioldiacrylat und 1,7 g (5,6 mmol) Acryloxyethyltrimethylammoniumchlorid als 80 Gew.-%ige Lösung der Fa. Atochem in Wasser verwendet werden.
Nach der Filtration wird eine stabile, vernetzte Emulsion mit einer Viskosität von 5700 mm$^2$/s bei 25°C und einem Festgehalt von 23 Prozent erhalten.

Beispiel 14:

Beispiel 1 wird, wie oben beschrieben, wiederholt, mit der Abänderung, daß statt 0,904 g 1,6-Hexandioldiacrylat 1,13 g (1,6 mmol) eines Diacrylates der Formel $CH_2$=CH-C(=O)-(O-$CH_2$-$CH_2$)$_{15}$-O-C(=O)-CH=$CH_2$, käuflich erwerblich unter dem Handelsnamen SR 610 der Fa. Sartomer, und 1,267 g (4,8 mmol) 2-Acryloyloxyethylhydrogenphthalat der Fa. Siber & Hegner verwendet werden.
Nach der Filtration wird eine stabile, vernetzte Emulsion mit einem Festgehalt von 24,8 Prozent erhalten.

Beispiel 15:

Beispiel 1 wird, wie oben beschrieben, wiederholt, mit der Abänderung, daß statt 0,904 g 1,6-Hexandioldiacrylat 0,24 g (0,8 mmol) Tripropylenglykoldiacrylat und 0,31 g (1,6 mmol) Acryloyloxyethylphosphorsäure der Fa. Siber & Hegner verwendet werden.
Nach der Filtration wird eine stabile, vernetzte Emulsion mit einem Festgehalt von 39,5 Prozent erhalten.

Beispiel 16:

Beispiel 1 wird, wie oben beschrieben, wiederholt, mit der Abänderung, daß statt 0,904 g 1,6-Hexandioldiacrylat 0,098 g (0,4 mmol) Dipropylenglykoldiacrylat und 0,587g (3,6 mmol) Acrylamidoglykolsäure-Hydrat verwendet werden.

Nach der Filtration wird eine stabile, opake und vernetzte Emulsion mit einem Festgehalt von 23,2 Prozent erhalten.

Beispiel 17:

Beispiel 1 wird, wie oben beschrieben, wiederholt, mit der Abänderung, daß statt 0,904 g 1,6 Hexandioldiacrylat 1,02 g (2 mmol) Pentaaerythritdiacrylatmonostearat und 0,464 g (4 mmol) Hydroxyethylacrylat verwendet werden. Nach der Filtration wird eine stabile, vernetzte Emulsion mit einem Festgehalt von 25,4 Prozent erhalten.

Beispiel 18:

Beispiel 8 wird, wie oben beschrieben, wiederholt, nur daß statt 0,425 g Neopentyl-glykoldiacrylat, 0,09 g (0,4 mmol) 1,6-Hexandioldiacrylat und 0,115 g (1,6 mmol) Acrylsäure verwendet werden.
Nach der Filtration über ein feinmaschiges Metallnetz wird eine stabile, vernetzte und milchige Emulsion mit einem Festgehalt von 40,2 Prozent erhalten.

Beispiel 19:

3,2 g (0,178 mol) Wasser, 0,226 g (1 mmol) 1,6-Hexandioldiacrylat und 6,57 g (15 mmol) eines Acrylates der Formel $CH_2=CH-C(=O)-(O-CH_2-CH_2)_9-OCH_3$, käuflich erwerblich unter dem Handelsnamen AM-90G der Fa. Siber & Hegner, werden unter Rühren vorgelegt. Dazu werden bei Umdrehungszahlen von 10 000 U/min. eines Turrax-Rührers 10 g (6 mmol freie Amingruppen) eines Siliconöles mit Aminoethylaminopropylgruppen und einer Viskosität von 900 $mm^2$/s bei 25°C (Finisch WT 1650, käuflich erwerblich bei der Wacker-Chemie GmbH) zügig zugegeben. Es bildet sich eine Wasser-in-Öl-Emulsion, die schließlich mit 52 g (2,9 mol) Wasser versetzt wird. Es wird eine stabile, vernetzte, milchige Emulsion mit einem Festgehalt von 30 Prozent erhalten.

**Patentansprüche**

1. Organopolysiloxanzusammensetzungen enthaltend

   (A) Organopolysiloxane, welche mindestens einen SiC-gebundenen organischen Rest mit basischem Stickstoff aufweisen, wobei der basische Stickstoff partiell als Salz einer wasserlöslichen organischen oder anorganischen Säure oder wasserunlöslichen organischen Säure vorliegen kann,
   (B) in (A) unlösliche oder lösliche, anionische, kationische, nicht-ionische oder amphotere Tenside,
   (C) substituierte oder nicht substituierte Diacrylate und/oder Oligoacrylate,
   gegebenenfalls (C') substituierte oder nicht substituierte Acrylate und
   (D) Wasser.

2. Organopolysiloxanzusammensetzungen herstellbar, indem Emulsionen enthaltend

   (A) Organopolysiloxane, welche mindestens einen SiC-gebundenen organischen Rest mit basischem Stickstoff aufweisen, wobei der basische Stickstoff partiell als Salz einer wasserlöslichen organischen oder anorganischen Säure oder wasserunlöslichen organischen Säure vorliegen kann,
   (B) in (A) unlösliche oder lösliche, anionische, kationische, nicht-ionische oder amphotere Tenside und
   (D) Wasser mit
   (C) substituierten oder nicht substituierten Diacrylaten und/oder Oligoacrylaten und
   gegebenenfalls (C') substituierten oder nicht substituierten Acrylaten

   in einer Michael-Addition-ähnlichen Reaktion umgesetzt werden.

3. Verfahren zur Herstellung von Organopolysiloxanzusammensetzungen, dadurch gekennzeichnet, daß Emulsionen enthaltend

   (A) Organopolysiloxane, welche mindestens einen SiC-gebundenen organischen Rest mit basischem Stickstoff aufweisen, wobei der basische Stickstoff partiell als Salz einer wasserlöslichen organischen oder anorganischen Säure oder wasserunlöslichen organischen Säure vorliegen kann,
   (B) in (A) unlösliche oder lösliche, anionische, kationische, nicht-ionische oder amphotere Tenside und
   (D) Wasser mit

(C) substituierten oder nicht substituierten Diacrylaten und/oder Oligoacrylaten und gegebenenfalls (C') substituierten oder nicht substituierten Acrylaten

in einer Michael-Addition-ähnlichen Reaktion umgesetzt werden.

4. Verfahren nach Anspruch 3, dadurch gekennzeichnet, daß als Bestandteil (A) Organopolysiloxane aus Einheiten der allgemeinen Formel

$$R_aY_bSi(OR^1)_cO_{\frac{4-(a+b+c)}{2}} \qquad (I),$$

worin R gleich oder verschieden sein kann und Wasserstoffatom oder einen einwertigen, von basischem Stickstoff freien organischen Rest bedeutet,

$R^1$ gleich oder verschieden sein kann und Wasserstoffatom, einen Alkylrest oder einen Alkoxyalkylrest bedeutet,
Y gleich oder verschieden sein kann und einen einwertigen, SiC-gebundenen Rest mit basischem Stickstoff bedeutet,
a 0, 1, 2 oder 3,
b 0, 1, oder 2 und
c 0, 2 oder 3 ist,

mit der Maßgabe, daß die Summe aus a, b und c in den Einheiten der Formel (I) kleiner oder gleich 3 ist und pro Molekül mindestens ein Rest Y enthalten ist, verwendet werden.

**Claims**

1. Organopolysiloxane compositions comprising

(A) organopolysiloxanes which contain at least one SiC-bonded organic radical containing basic nitrogen, where the basic nitrogen can be present partially as a salt of a water-soluble organic or inorganic acid or water-insoluble organic acid,
(B) anionic, cationic, nonionic or amphoteric surfactants which are insoluble or soluble in (A),
(C) substituted or unsubstituted diacrylates and/or oligoacrylates,
if desired (C') substituted or unsubstituted acrylates and
(D) water.

2. Organopolysiloxane compositions which can be prepared by reacting emulsions comprising

(A) organopolysiloxanes which contain at least one SiC-bonded organic radical containing basic nitrogen, where the basic nitrogen can be present partially as a salt of a water-soluble organic or inorganic acid or water-insoluble organic acid,
(B) anionic, cationic, nonionic or amphoteric surfactants which are insoluble or soluble in (A) and
(D) water with
(C) substituted or unsubstituted diacrylates and/or oligoacrylates
and, if desired (C') substituted or unsubstituted acrylates

in a reaction similar to a Michael addition.

3. Process for preparing organopolysiloxane compositions characterized in that emulsions comprising

(A) organopolysiloxanes which contain at least one SiC-bonded organic radical containing basic nitrogen, where the basic nitrogen can be present partially as a salt of a water-soluble organic or inorganic acid or water-insoluble organic acid,

(B) anionic, cationic, nonionic or amphoteric surfactants which are insoluble or soluble in (A) and
(D) water with
(C) substituted or unsubstituted diacrylates and/or oligoacrylates
and, if desired (C') substituted or unsubstituted acrylates

are reacted in a reaction similar to a Michael addition.

4. Process according to Claim 3, characterized in that the constituent (A) used comprises organopolysiloxanes comprising units of the formula

$$R_a Y_b Si(OR^1)_c O_{\frac{4-(a+b+c)}{2}}$$ (I),

where R can be identical or different and are each a hydrogen atom or a monovalent organic radical containing no basic nitrogen,

$R^1$ can be identical or different and are each a hydrogen atom, an alkyl radical or an alkoxyalkyl radical,
Y can be identical or different and are each a monovalent, SiC-bonded radical containing basic nitrogen,
a is 0, 1, 2 or 3
b is 0, 1 or 2 and
c is 0, 2 or 3,

with the proviso that the sum of a, b and c in the units of the formula (I) is less than or equal to 3 and at-least one radical Y is present per molecule.

**Revendications**

1. Compositions d'organopolysiloxanes comprenant

(A) des organopolysiloxanes renfermant au moins un radical organique lié à SiC contenant de l'azote basique, l'azote basique pouvant se présenter en partie sous forme de sel d'un acide organique ou inorganique hydrosoluble ou d'un acide organique insoluble dans l'eau,
(B) des tensioactifs anioniques, cationiques, non ioniques ou amphotères insolubles ou solubles dans (A),
(C) des diacrylates et/ou oligoacrylates substitués ou non substitués,
éventuellement (C') des acrylates substitués ou non substitués, et
(D) de l'eau.

2. Compositions d'organopolysiloxanes pouvant être préparées en faisant réagir des émulsions comprenant

(A) des organopolysiloxanes renfermant au moins un radical organique lié à SiC contenant de l'azote basique, l'azote basique pouvant se présenter en partie sous forme de sel d'un acide organique ou inorganique hydrosoluble ou d'un acide organique insoluble dans l'eau,
(B) des tensioactifs anioniques, cationiques, non ioniques ou amphotères insolubles ou solubles dans (A),
(D) de l'eau, avec
(C) des diacrylates et/ou oligoacrylates substitués ou non substitués, et
éventuellement (C') des acrylates substitués ou non substitués

dans une réaction analogue à l'addition de Michael.

3. Procédé de préparation de compositions d'organopolysiloxanes, caractérisé en ce que l'on fait réagir des émulsions comprenant

(A) des organopolysiloxanes renfermant au moins un radical organique lié à SiC contenant de l'azote basique, l'azote basique se présentant en partie sous forme de sel d'un acide organique ou inorganique hydrosoluble ou d'un acide organique insoluble dans l'eau,
(B) des tensioactifs anioniques, cationiques, non ioniques ou amphotères insolubles ou solubles dans (A),

(D) de l'eau, avec

(C) des diacrylates et/ou oligoacrylates substitués ou non substitués, et

éventuellement (C') des acrylates substitués ou non substitués

dans une réaction analogue à l'addition de Michael.

**4.** Procédé selon la revendication 3, caractérisé en ce que l'on utilise, en tant que constituant (A), des organopolysiloxanes à base de motifs de formule générale

$$R_a Y_b Si(OR^1)_c \frac{O_{4-(a+b+c)}}{2} \qquad (I),$$

dans laquelle R peut être identique ou différent et représente un atome d'hydrogène ou un radical organique monovalent dépourvu d'azote basique,

R$_1$ peut être identique ou différent et représente un atome d'hydrogène, un radical alkyle ou un radical alcoxyalkyle,

Y peut être identique ou différent et représente un radical monovalent lié à SiC renfermant de l'azote basique,

a vaut 0, 1, 2 ou 3,

b vaut 0, 1 ou 2 et

c vaut 0, 2 ou 3,

à condition que la somme de a, b et c dans les motifs de formule (I) soit inférieure ou égale à 3 et qu'au moins un radical Y soit présent par molécule.